# EUROPÄISCHE PATENTSCHRIFT

(11) **EP 1 469 041 B1**
(45) Veröffentlichungstag und Bekanntmachung des Hinweises auf die Patenterteilung: **27.05.2015**
(21) Anmeldenummer: 04005556.8
(22) Anmeldetag: 09.03.2004
(51) Int. Cl.: C09C 1/00

(54) **Silberpigmente**
Silverpigments
Pigments de couleur d'argent

(30) Priorität: 27.03.2003 DE 10313978
(43) Veröffentlichungstag der Anmeldung: 20.10.2004
(73) Patentinhaber: Merck Patent GmbH, 64293 Darmstadt (DE)
(72) Erfinder: Schmidt, Christoph, Dr., 65830 Kriftel (DE); Delp, Tanja, 64287 Darmstadt (DE); Dietz, Johann, Dr., 63218 Dietzenbach (DE)

(56) Entgegenhaltungen:
- EP-A2- 0 757 085
- WO-A2-02/090448
- DE-A1- 1 467 468
- US-A- 3 087 828

## Beschreibung

Die vorliegende Erfindung betrifft Interferenz-Silberpigmente auf der Basis von plättchenförmigen, transparenten niedrigbrechenden Substraten und deren Verwendung in Farben, Lacken, Druckfarben, Kunststoffen, als Dotiermittel für die Lasermarkierung von Kunststoffen und Papieren, als Additiv im Lebensmittel- und Pharmabereich und in kosmetischen Formulierungen.

Glanz- oder Effektpigmente werden in vielen Bereichen der Technik eingesetzt, insbesondere im Bereich der Autolacke, der dekorativen Beschichtung, im Kunststoff, in Farben, Druckfarben sowie in kosmetischen Formulierungen.

Glanzpigmente, die einen winkelabhängigen Farbwechsel zwischen mehreren Interferenzfarben zeigen, sind aufgrund ihres Farbenspiels von besonderem Interesse für Autolacke sowie bei fälschungssicheren Wertschriften.

Besondere Bedeutung besitzen dabei Perlglanzpigmente auf mineralischer Basis. Perlglanzpigmente werden durch Beschichtung eines anorganischen, plättchenförmigen Trägers mit einer hochbrechenden, meist oxidischen, Schicht hergestellt. Die Farbe dieser Pigmente wird durch wellenlängenselektive Teilreflektion und Interferenz des reflektierten bzw. transmittierten Lichts an den Medium/Oxid- bzw. Oxid/Substrat-Grenzflächen hervorgerufen.

Die Interferenzfarbe dieser Pigmente wird von der Dicke der Oxidschicht bestimmt. Der Farbton eines Silberpigments wird durch eine im optischen Sinn einzelne hochbrechende Schicht erzeugt, deren optische Dicke ein Reflexionsmaximum (1. Ordnung) im sichtbaren Wellenlängenbereich bei ca. 500 nm bedingt. Diese Wellenlänge nimmt das menschliche Auge als die Farbe Grün wahr. Der Intensitätsverlauf dieses Maximums auf deren Wellenlängenachse ist jedoch so breit, dass im ganzen Bereich des sichtbaren Lichts so viel Licht reflektiert wird, dass das menschliche Auge einen sehr hellen, aber farblosen Eindruck wahrnimmt.

Gemäß den - insbesondere aus der Vergütung optischer Bauteile - bekannten Regeln der Optik dünner Schichten steigt die Intensität des reflektierten Lichtes bei Anordnung von mehreren Schichten mit abwechselnd hohen und niedrigen Brechzahlen gegenüber einer Einfachschicht stark an. So wird durch Aufbringen eines TiO₂-SiO₂-TiO₂-Schichtsystems auf Glimmerpartikel die Intensität des reflektierten Lichts im Vergleich zu einem TiO₂-Einfachschichtsystem - um ca. 60 % angehoben. Demzufolge wird das Profil des durch Interferenz reflektierten Lichts wesentlich ausgeprägter, so dass für ein solches mehrschichtiges System eine intensive und brillante Reflexionsfarbe erwartet werden muss. Pigmente dieses Typs sind in der DE 196 18 569 A1 beschrieben.

Aus dem Stand der Technik, z.B. US 3,087,828, EP 0 757 085 A2 und WO 02/090448 A2, sind Silberpigmente bekannt auf der Basis von Glimmerplättchen und Glasplättchen. Glimmerplättchen besitzen eine sehr breite Streuung der Schichtdicke und verhalten sich daher in Bezug auf die Interferenzfarbe neutral. Damit stellen Perlglanzpigmente, die eine einzelne hochbrechende Umhüllung von Glimmer aufweisen, optische Einfachschichtsysteme dar, d.h., die Interferenzfarbe wird ausschließlich von der Schichtdicke der hochbrechenden Metalloxidschicht bestimmt. Der coloristische Gestaltungsspielraum eines Glimmer/Metalloxid-Silberpigmentes ist daher sehr eingeschränkt.

Zudem besitzen Glimmerteilchen aufgrund ihrer Schichtstruktur Unebenheiten auf der Oberfläche die Streuung verursachen und damit die Transparenz und die koloristische Qualität des Produktes herabsetzen. Darüber hinaus zeigt Glimmer eine mehr oder weniger stark ausgeprägte graubraune Körperfarbe. Diese Eigenschaft setzt die Transparenz weiter herab und beeinflusst die Absorptionsfarbe der Anwendungsmedien in ungewünschter Weise.

Weiterhin sind Mehrschichtpigmente bekannt, die einen silberfarbenen Farbeindruck hervorrufen, wie sie z.B. in der EP 1213330 A1 beschrieben werden. Bei diesen Pigmenten kann eine intensive Farbe dadurch unterdrückt werden, dass die SiO₂-Schicht der TiO₂-SiO₂-TiO₂-Schichtenfolge sehr dünn (ca. 50 nm) aufgebracht wurde. Diese Pigmente bieten wie die einschichtigen Silberpigmente auf Glimmerbasis nur sehr geringen Spielraum in der Gestaltung der koloristischen Eigenschaften und besitzen die oben ausgeführten Nachteile des Glimmers als Substrat.

Aufgabe der vorliegenden Erfindung ist es daher ein silberfarbenes Interferenzpigment zur Verfügung zu stellen, das sich insbesondere durch hohe Transparenz, rein weiße Körperfarbe und farbliche Gestaltungsmöglichkeiten auszeichnet, die über einen ausschließlichen Silbereffekt hinausgehen.

Überraschenderweise wurde nun gefunden, dass ein reales, mit einer dünnen TiO₂-Schicht beschichtetes transparentes niedrigbrechendes Plättchen, wie z. B. ein SiO₂-Plättchen, einen silbernen Farbeindruck hervorruft. Dies gelingt durch eine Beschichtung der Plättchen mit einer TiO₂-Schicht, deren Dicke genau auf die Dicke der Plättchen eingestellt wird.

Im Vergleich zu einfach beschichteten Silberpigmenten auf Glimmerbasis und den Interferenzpigmenten aus der EP 1213330 A1 zeigen die erfindungsgemäßen Pigmente folgende Eigenschaften:
- ausgezeichnete Transparenz im Anwendungsmedium
- rein weiße Körperfarbe
- sehr helle silbrige Interferenzfarbe

Zusätzlich zu diesen Eigenschaften zeichnen sich die erfindungsgemäßen Pigmente gegenüber den bekannten Interferenzpigmenten durch folgende Merkmale aus:
- kräftiger Glitzer-Effekt
- abstimmbare Farbtönung
- Winkelabhängigkeit der Farbtönung

Die genannte Farbtönung kann durch Abstimmung der TiO₂-Schichtdicke und durch Wahl der transparenten Plättchen, wie z.B. SiO₂-Plättchen, verschiedener Dicken in weiten Bereichen variiert werden, ohne das der Eindruck eines Interferenzpigmentes verloren geht.

Gegenstand der Erfindung sind daher Interferenz-Silberpigmente auf der Basis von plättchenförmigen transparenten niedrigbrechenden Substraten gemäß Anspruch 1, die eine hochbrechende Beschichtung bestehend aus TiO₂ mit einer Schichtdicke von 5 - 300 nm und optional eine äußere Schutzschicht aufweisen.

Gegenstand der Erfindung ist weiterhin die Verwendung der erfindungsgemäßen Silberpigmente in Farben, Lacken, Druckfarben, Kunststoffen, Knopfpasten, keramischen Materialien, Gläsern, zur Saatgutbeschichtung, als Dotiermittel bei der Lasermarkierung von Kunststoffen und Papieren, als Additive zur Einfärbung im Lebensmittel- und Pharmabereich und insbesondere in kosmetischen Formulierungen. Weiterhin sind die erfindungsgemäßen Pigmente auch zur Herstellung von Pigmentpräparationen sowie zur Herstellung von Trockenpräparaten, wie z. B. Granulaten, Chips, Pellets, Briketts, etc., geeignet. Die Trockenpräparate sind insbesondere für Druckfarben und für kosmetische Formulierungen geeignet.

Geeignete Basissubstrate für die erfindungsgemäßen Interferenzpigmente sind Substrate mit einem Brechungsindex < 1,9, z. B. plättchenförmige SiO₂-Plättchen, wie sie beispielsweise in der WO 93/08237 beschrieben werden. Weiterhin ist neben den genannten SiO₂-Plättchen jedes dem Fachmann bekannte plättchenförmige, transparente Substrat geeignet, wie z. B. Al₂O₃-Plättchen, Glasplättchen und plättchenförmige Kunststoffpartikel. Ganz besonders bevorzugte Substrate sind SiO₂-Plättchen. Die besonderen Eigenschaften, wie die abstimmbare Farbtönung und insbesondere deren Winkelabhängigkeit, werden durch eine definierte mittlere Dichte mit enger Dickenverteilung besonders unterstützt.

Die Standardabweichung der Dicke der Substratplättchen beträgt daher ≤ 20 %, bevorzugt ≤ 10 % und besonders bevorzugt ≤ 5 % bezogen auf deren mittlere Schichtdicke.

Die Größe des Basissubstrats ist an sich nicht kritisch und kann auf den jeweiligen Anwendungszweck abgestimmt werden. In der Regel haben die plättchenförmigen transparenten Substrate eine mittlere Dicke zwischen 0,02 und 10 µm, vorzugsweise zwischen 0,03 und 5 µm, insbesondere zwischen 0,05 und 3 µm. Die Ausdehnung in den beiden anderen Dimensionen beträgt üblicherweise zwischen 1 und 450 µm, vorzugsweise zwischen 2 und 200 µm, und insbesondere zwischen 5 und 100 µm.

Zur Erzielung eines reinen Silbereffekts mit überlagerter, winkelabhängiger Farbtönung ist es wichtig, dass die mittlere Dicke der einzelnen Plättchen innerhalb einer Standardabweichung bei ≤ 20 % liegt.

Vorzugsweise beträgt der Formfaktor (aspect ratio: Durchmesser/Dicke-Verhältnis) des Substrats 1 - 1000, insbesondere 3 - 500 und ganz besonders bevorzugt 5 - 200.

Die Dicke der TiO₂-Schicht und des Substrats, z.B. SiO₂-Substrats, ist wesentlich für die optischen Eigenschaften des Pigmentes. Die Dicke der Schicht muss genau eingestellt werden und an die mittlere Dicke der Substratplättchen angepasst sein. Die TiO₂-Schichten betragen 5 - 300 nm, vorzugsweise 10 - 200 nm, insbesondere 30 - 150 nm.

Die erfindungsgemäßen Pigmente lassen sich relativ leicht herstellen durch die Erzeugung einer hochbrechenden TiO₂-Interferenzschicht mit genau definierter Dicke und glatter Oberfläche auf den feinteiligen, plättchenförmigen Substraten. Das TiO₂ kann sowohl als Rutil als auch als Anatas vorliegen. Das TiO₂ liegt vorzugsweise in der Rutil-Modifikation vor. Insbesondere bevorzugt sind SiO₂-Plättchen, die mit einer Rutilschicht belegt sind.

Als Substrate sind alle anorganischen und organischen transparenten Materialen geeignet, die sich in Form feinteiliger Plättchen mit enger Dickenverteilung herstellen lassen. Als organische Substrate kommen unter anderem Polymere, wie z.B. Polyester (z.B. PET), Polycarbonate, Polyimide, Polymethacrylate, in Frage.

Besonders bevorzugt sind Interferenzpigmente auf Basis von SiO₂, Al₂O₃, alle Einkristalle mit flaky appear und Glasplättchen, die mit einer dünnen Titandioxid-Schicht belegt sind.

Die Metalloxidschicht wird vorzugsweise nasschemisch aufgebracht, wobei die zur Herstellung von Perlglanzpigmenten entwickelten nass-chemischen Beschichtungsverfahren angewendet werden können. Derartige Verfahren sind z. B. beschrieben in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 oder auch in weiteren dem Fachmann bekannten Patentdokumenten und sonstigen Publikationen.

Bei der Nassbeschichtung werden die Substratpartikel in Wasser suspendiert und mit ein oder mehreren hydrolysierbaren Titansalzen bei einem für die Hydrolyse geeigneten pH-Wert versetzt, der so gewählt wird, dass die Metalloxide bzw. Metalloxidhydrate direkt auf den Plättchen ausgefällt werden, ohne dass es zu wesentlichen Nebenfällungen kommt. Der pH-Wert wird üblicherweise durch gleichzeitiges Zudosieren einer Base und/oder Säure konstant gehalten. Anschließend werden die Pigmente abgetrennt, gewaschen und bei 50-150 °C getrocknet und gegebenenfalls 0,5-3 h geglüht, wobei die Glühtemperatur im Hinblick auf die jeweils vorliegende Beschichtung optimiert werden kann. In der Regel liegen die Glühtemperaturen zwischen 250 und 1000 °C, vorzugsweise zwischen 350 und 950 °C.

Weiterhin kann die Beschichtung auch in einem Wirbelbettreaktor durch Gasphasenbeschichtung erfolgen, wobei z. B. die in EP 0 045 851 A1 und EP 0 106 235 A1 zur Herstellung von Perlglanzpigmenten vorgeschlagenen Verfahren entsprechend angewendet werden können.

Der Farbton der Pigmente kann unter Erhaltung des Silbereffekts in sehr weiten Grenzen durch unterschiedliche Wahl der Belegungsmengen bzw. der daraus resultierenden Schichtdicken variiert werden. Die Feinabstimmung für einen bestimmten Farbton kann über die reine Mengenwahl hinaus durch visuell oder messtechnisch kontrolliertes Anfahren der gewünschten Farbe erreicht werden.

Zur Erhöhung der Licht-, Wasser- und Wetterstabilität empfiehlt es sich häufig, in Abhängigkeit vom Einsatzgebiet, das fertige Pigment einer Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage. Durch diese Nachbeschichtung wird die chemische Stabilität weiter erhöht oder die Handhabung des Pigments, insbesondere die Einarbeitung in unterschiedliche Medien, erleichtert. Zur Verbesserung der Benetzbarkeit, Dispergierbarkeit und/oder Verträglichkeit mit den Anwendungsmedien können funktionelle Beschichtungen aus Al₂O₃ oder ZrO₂ oder deren Gemische bzw. Mischphasen auf die Pigmentoberfläche aufgebracht werden. Weiterhin sind organische bzw. organisch/anorganisch kombinierte Nachbeschichtungen möglich, z.B. mit Silanen, wie beispielsweise beschrieben in der EP 0090259, EP 0 634 459, WO 99/57204, WO 96/32446, WO 99/57204, U.S. 5,759,255, U.S. 5,571,851, WO 01/92425 oder in J.J. Ponjeé, Philips Technical Review, Vol. 44, No. 3, 81 ff. und P.H. Harding J.C. Berg, J. Adhesion Sci. Technol. Vol. 11 No. 4, S. 471-493.

Die erfindungsgemäßen Silberpigmente sind einfach und leicht zu handhaben. Die Pigmente können durch einfaches Einrühren in das Anwendungssystem eingearbeitet werden. Ein aufwendiges Mahlen und Dispergieren der Pigmente ist nicht erforderlich.

Da die erfindungsgemäßen Silberpigmente starken Glanz mit hoher Transparenz und rein weißer Körperfarbe verbinden, lassen sich mit ihnen besonders wirksame Effekte in den verschiedenen Anwendungsmedien erzielen ohne die Absorptionsfarbe wesentlich zu beeinflussen.

Es versteht sich von selbst, dass für die verschiedenen Anwendungszwecke die Interferenzpigmente auch vorteilhaft in Abmischung mit organischen Farbstoffen, organischen Pigmenten oder anderen Pigmenten, wie z. B. transparenten und deckenden Weiß-, Bunt- und Schwarzpigmenten sowie mit plättchenförmigen Eisenoxiden, organischen Pigmenten, holographischen Pigmenten, LCPs (Liquid Crystal Polymers), und herkömmlichen transparenten, bunten und schwarzen Glanzpigmenten auf der Basis von metalloxidbeschichteten Glimmer- und SiO₂-Plättchen, etc., verwendet werden können. Die Interferenzpigmente können in jedem Verhältnis mit handelsüblichen Pigmenten und Füllstoffen gemischt werden.

In den verschiedenen Anwendungen kann das erfindungsgemäße Pigment auch mit weiteren Farbmitteln jeden Typs, z. B. organischen und/oder anorganischen Absorptionspigmenten und Farbstoffen, mehrschichtigen Interferenzpigmenten, wie z.B. Timiron^{®}, Sicopearl^{®} (BASF AG), ChromaFlair^{®} (Flex Products Inc.), BiOCI-Pigmenten, Fischsilber, Metallpigmente, z. B. von der Fa. Eckart, kombiniert werden. Dabei sind den Mischungsverhältnissen und der Konzentration keine Grenzen gesetzt.

Die erfindungsgemäßen Pigmente sind mit einer Vielzahl von Farbsystemen kompatibel vorzugsweise aus dem Bereich der Lacke, Farben und Druckfarben. Für die Herstellung der Druckfarben für z. B. den Tiefdruck, Flexodruck, Offsetdruck, Offsetüberdrucklackierung, ist eine Vielzahl von Bindern, insbesondere wasserlösliche Typen, geeignet, wie sie z. B. von den Firmen BASF, Marabu, Pröll, Sericol, Hartmann, Gebr. Schmidt, Sicpa, Aarberg, Siegberg, GSB-Wahl, Follmann, Ruco oder Coates Screen INKS GmbH vertrieben werden. Die Druckfarben können auf Wasserbasis oder Lösemittelbasis aufgebaut sein. Weiterhin sind die Pigmente auch für die Lasermarkierung von Papier und Kunststoffen, sowie für Anwendungen im Agrarbereich, z. B. für Gewächshausfolien, sowie z. B. für die Farbgebung von Zeltplanen, geeignet.

Das erfindungsgemäße Silberpigment kann zur Pigmentierung von Lacken, Druckfarben, Kunststoffen, Agrarfolien, Saatgutbeschichtung, Lebensmitteleinfärbungen, Knopfpasten, Arzneimittelüberzügen oder kosmetischen Formulierungen, wie Lippenstifte, Nagellacke, Presspuder, Shampoos, lose Puder und Gele, verwendet werden. Die Konzentration der Pigmentmischung im zu pigmentierenden Anwendungssystem liegt in der Regel zwischen 0,1 und 70 Gew.%, vorzugsweise zwischen 0,1 und 50 Gew.% und insbesondere zwischen 0,5 und 10 Gew.%, bezogen auf den Gesamtfestkörpergehalt des Systems. Sie ist in der Regel abhängig vom konkreten Anwendungsfall.

Kunststoffe enthaltend das erfindungsgemäße Silberpigment in Mengen von 0,01 bis 50 Gew. %, insbesondere 0,1 bis 7 Gew.%, zeichnen sich häufig durch einen besonders ausgeprägten Sparkle-Effekt aus.

Im Lackbereich, insbesondere im Automobillack, wird das Silberpigment, auch für 3-Schichtaufbauten in Mengen von 0,1-10 Gew.%, vorzugsweise 1 bis 3 Gew.%, eingesetzt.

Im Lack hat das erfindungsgemäße Pigment den Vorteil, dass der angestrebte Glanz durch eine einschichtige Lackierung (Einschichtsystem bzw. Base coat im 2-Schichtaufbau) erzielt wird. Im Vergleich mit Lackierungen, die ein Mehrschichtpigment auf Basis von Glimmer enthalten, statt des erfindungsgemäßen Silberpigments, zeigen Lackierungen mit dem erfindungsgemäßen Pigment eine deutlichere Tiefenwirkung und einen stärker ausgeprägten Glanzeffekt.

Das erfindungsgemäße Silberpigment kann auch vorteilhaft in der dekorativen und pflegenden Kosmetik eingesetzt werden. Die Einsatzkonzentration reicht von 0,01 Gew.% im Shampoo bis zu 100 Gew. % bei losen Pudern. Bei einer Mischung der Silberpigmente mit sphärischen Füllstoffen, z. B. SiO₂, kann die Konzentration bei 0,01-70 Gew.% in der Formulierung liegen. Die kosmetischen Produkte, wie z.B. Nagellacke, Lippenstifte, Presspuder, Shampoos, lose Puder und Gele, zeichnen sich durch besonders interessante Glanzeffekte aus. Der Glitzer-Effekt im Nagellack kann gegenüber herkömmlichen Nagellacken mit Hilfe der erfindungsgemäßen Pigmente deutlich gesteigert werden. Weiterhin kann das erfindungsgemäße Pigment in Badezusätzen, Zahnpasten und zur Veredlung von Lebensmitteln, z. B. Masse-Einfärbung und/oder Überzüge von Bonbons, Weingummi, wie z.B. Gummibärchen, Pralinen, Lakritze, Konfekt, Zuckerstangen, Brausegetränke, Limonaden, etc. oder als Überzug z.B. bei Dragees und Tabletten im Pharmabereich, eingesetzt werden.

Das erfindungsgemäße Pigment kann weiterhin mit handelsüblichen Füllern gemischt werden. Als Füllstoffe sind z.B. zu nennen natürlicher und synthetischer Glimmer, Nylon Powder, reine oder gefüllte Melamin-harze, Talcum, Gläser, Kaolin, Oxide oder Hydroxide von Aluminium, Magnesium, Calcium, Zink, BiOCl, Bariumsulfat, Calciumsulfat, Calcium-carbonat, Magnesiumcarbonat, Kohlenstoff, sowie physikalische oder chemische Kombinationen dieser Stoffe. Bezüglich der Partikelform des Füllstoffes gibt es keine Einschränkungen. Sie kann den Anforderungen gemäß z. B. plättchenförmig, sphärisch oder nadelförmig sein.

Selbstverständlich können die erfindungsgemäßen Pigmente in den Formulierungen auch mit jeder Art von kosmetischen Roh- und Hilfsstoffen kombiniert werden. Dazu gehören u.a. Öle, Fette, Wachse, Filmbildner, Konservierungsmittel und allgemein anwendungstechnische Eigenschaften bestimmende Hilfsstoffe, wie z. B. Verdicker und rheologische Zusatzstoffe wie etwa Bentonite, Hektorite, Siliciumdioxide, Ca-Silicate, Gelatinen, hochmolekulare Kohlenhydrate und/oder oberflächenaktive Hilfsmittel, etc.

Die die erfindungsgemäßen Pigmente enthaltenden Formulierungen können dem lipophilen, hydrophilen oder hydrophoben Typ angehören. Bei heterogenen Formulierungen mit diskreten wässrigen und nichtwässrigen Phasen können die erfindungsgemäßen Pigmente in jeweils nur einer der beiden Phasen enthalten oder auch über beide Phasen verteilt sein.

Die pH-Werte der Formulierungen können zwischen 1 und 14, bevorzugt zwischen 2 und 11 und besonders bevorzugt zwischen 5 und 8 liegen.

Den Konzentrationen der erfindungsgemäßen Pigmente in der Formulierung sind keine Grenzen gesetzt. Sie können - je nach Anwendungsfall - zwischen 0,001 (rinse-off-Produkte, z.B. Duschgele) und 100 % (z.B. Glanzeffekt-Artikel für besondere Anwendungen) liegen.

Die erfindungsgemäßen Pigmente können weiterhin auch mit kosmetischen Wirkstoffen kombiniert werden. Geeignete Wirkstoffe sind z.B. Insect Repellents, UV A/BC-Schutzfilter (z.B. OMC, B3, MBC), Anti-Ageing-Wirkstoffe, Vitamine und deren Derivate (z.B. Vitamin A, C, E, etc.), Selbstbräuner (z.B. DHA, Erytrolyse, u.a.) sowie weitere kosmetische Wirkstoffe, wie z.B. Bisabolol, LPO, Ectoin, Emblica, Allantoin, Bioflavanoide und deren Derivate.

Bei der Pigmentierung von Bindemittelsystemen z. B. für Farben und Druckfarben für den Tiefdruck, Offsetdruck oder Siebdruck, oder als Vorprodukt für Druckfarben, hat sich der Einsatz der erfindungsgemäßen Interferenzpigmente in Form von hochpigmentierten Pasten, Granulaten, Pellets, etc., als besonders geeignet erwiesen. Das Pigment wird in der Regel in die Druckfarbe in Mengen von 2-35 Gew.%, vorzugsweise 5-25 Gew.%, und insbesondere 8-20 Gew.% eingearbeitet. Offsetdruckfarben können die Pigmente bis zu 40 Gew.% und mehr enthalten. Die Vorprodukte für die Druckfarben, z.B. in Granulatform, als Pellets, Briketts, etc., enthalten neben dem Bindemittel und Additiven bis zu 98 Gew.% des erfindungsgemäßen Pigments. Die Druckfarben enthaltend das erfindungsgemäße Pigment zeigen reinere Silberfarbtöne als mit herkömmlichen Effektpigmenten. Die Partikeldicken der erfindungsgemäßen Pigmente sind relativ gering und bedingen daher eine besonders gute Verdruckbarkeit.

Die erfindungsgemäßen Interferenzpigmente sind weiterhin geeignet zur Herstellung von fließfähigen Pigmentpräparationen und Trockenpräparaten, insbesondere für Druckfarben, enthaltend ein oder mehrere erfindungsgemäße Silberpigmente, Bindemittel und optional ein oder mehrere Additive.

Gegenstand der Erfindung sind somit auch Formulierungen enthaltend das erfindungsgemäße Silberpigment.

Die nachfolgenden Beispiele sollen die Erfindung erläutern, ohne sie jedoch zu begrenzen.

### Beispiele

### Beispiel 1: Silberpigment mit Color Travel von Grün über Rotviolet nach Goldgrün

100 g SiO₂-Plättchen (Teilchengröße 5-50 µm, mittlere Dicke 450 nm, Standardabweichung der Dicke: 5 %) werden in 2 l VE-Wasser suspendiert und unter starkem Rühren auf 80 °C erhitzt. Zu dieser Mischung wird bei pH 1,6 eine Lösung von 12 g SnCl₄ x 5 H₂O und 40 ml Salzsäure (37 %) in 360 ml VE-Wasser mit einer Geschwindigkeit von 4 ml/min. zudosiert. Anschließend wird bei einem pH-Wert von 1,6 eine Menge von 370 ml TiCl₄-Lösung (400 g TiCl₄/l) mit einer Geschwindigkeit von 2 ml/min. zudosiert. Der pH-Wert wird bei der Zugabe der SnCl₄ x 5 H₂O-Lösung und TiCl₄-Lösungen jeweils mit NaOH-Lösung (32 %) konstant gehalten. Anschließend wird der pH-Wert mit Natronlauge (32 %) auf 5,0 eingestellt und 15 Minuten nachgerührt.

Zur Aufarbeitung wird das Pigment abfiltriert, mit 20 I VE-Wasser gewaschen, bei 110 °C getrocknet und 30 min. bei 850 °C geglüht. Das Produkt ist ein Interferenz-Silberpigment mit leichtem Grünton der sich bei schräger Betrachtung über Rotviolet nach Goldgrün verschiebt.

### Beispiel 2: Silberpigment mit Color Travel von Neutralsilber über Rotviolet nach Goldgelb

100 g SiO₂-Plättchen (Teilchengröße 5-50 µm, mittlere Dicke 450 nm, Standardabweichung der Dicke: 5 %) werden in 2 I VE-Wasser suspendiert und unter starkem Rühren auf 80 °C erhitzt. Zu dieser Mischung wird bei pH 1,6 eine Lösung von 12 g SnCl₄ x 5 H₂O und 40 ml Salzsäure (37 %) in 360 ml VE-Wasser mit einer Geschwindigkeit von 4 ml/min. zudosiert. Anschließend wird bei einem pH-Wert von 1,6 eine Menge von 350 ml TiCl₄-Lösung (400 g TiCl₄/l) mit einer Geschwindigkeit von 2 ml/min. zudosiert. Der pH-Wert wird bei der Zugabe der SnCl₄ x 5 H₂O-Lösung und TiCl₄-Lösungen jeweils mit NaOH-Lösung (32 %) konstant gehalten. Anschließend wird der pH-Wert mit Natronlauge (32 %) auf 5,0 eingestellt und 15 Minuten nachgerührt.

Zur Aufarbeitung wird das Pigment abfiltriert, mit 20 I VE-Wasser gewaschen, bei 110°C getrocknet und 30 min. bei 850 °C geglüht. Das Produkt ist ein Interferenz-Silberpigment dessen Farbe sich bei schräger Betrachtung über Rotviolet nach Goldgelb verschiebt.

### Beispiel 3: Silber-Pigment mit Color Travel von leicht bläulichem Silber über Rot nach Goldgrün

100 g SiO₂-Plättchen (Teilchengröße 5-50 µm, mittlere Dicke 450 nm, Standardabweichung der Dicke: 5 %) werden in 2 I VE-Wasser suspendiert und unter starkem Rühren auf 80 °C erhitzt. Zu dieser Mischung wird bei pH 1,6 eine Lösung von 12 g SnCl₄ x 5 H₂O und 40 ml Salzsäure (37 %) in 360 ml VE-Wasser mit einer Geschwindigkeit von 4 ml/min. zudosiert. Anschließend wird bei einem pH-Wert von 1,6 eine Menge von 340 ml TiCl₄-Lösung (400 g TiCl₄/l) mit einer Geschwindigkeit von 2 ml/min. zudosiert. Der pH-Wert wird bei der Zugabe der SnCl₄ x 5 H₂O-Lösung und TiCl₄-Lösungen jeweils mit NaOH-Lösung (32%) konstant gehalten. Anschließend wird der pH-Wert mit Natronlauge (32%) auf 5,0 eingestellt und 15 Minuten nachgerührt.

Zur Aufarbeitung wird das Pigment abfiltriert, mit 20 l VE-Wasser gewaschen, bei 110 °C getrocknet und 30 min. bei 850 °C geglüht. Das Produkt ist ein Interferenz-Silberpigment dessen Farbe sich bei schräger Betrachtung über Rot nach Goldgrün verschiebt.

### Anwendungsbeispiele

### Beispiel A: Shimmering Foundation

### Phase A

| **Rohstoff** | **Bezugsquelle** | **INCI** | **[%]** |
|---|---|---|---|
| Extender W | Merck KGaA/Rona^{®} | MICA, Cl 77891 (Titanium Dioxide) | 9,00 |
| MICRONA^{®} Matte Yellow | Merck KGaA/Rona^{®} | MICA, Cl 77492 (Iron Oxides) | 4,00 |
| MICRONA^{®} Matte Red | Merck KGaA/Rona^{®} | MICA, Cl 77491 (Iron Oxides) | 0,40 |
| MICRONA^{®} Matte Black | Merck KGaA/Rona^{®} | MICA, Cl 77499 (Iron Oxides) | 0,30 |
| Pigment aus Beispiel 1 | Merck KGaA | | 4,50 |
| RONASPHERE^{®} | Merck KGaA/Rona^{®} | SILICA | 5,00 |

### Phase B

| **Rohstoff** | **Bezugsquelle** | **INCI** | **[%]** |
|---|---|---|---|
| Blanose 7 HF | Aqualon GmbH | Cellulose Gum | 0,20 |
| Veegum | Vanderbilt | Magnesium Aluminium Silicate | 1,00 |
| Texapon K 1296 | Cognis GmbH | Sodium Lauryl Sulfate | 0,60 |
| Triethanolamin reinst | Merck KGaA/Rona^{®} | Triethanolamine | 0,50 |
| Titriplex III | Merck KGaA/Rona^{®} | Disodium EDTA | 0,25 |
| Methyl-4-hydroxybenzoat | Merck KGaA/Rona^{®} | Methylparaben | 0,15 |
| 1,2-Propandiol | Merck KGaA/Rona^{®} | Propylene Glycol | 10,90 |
| Wasser, demineralisiert | | Aqua (Water) | 42,95 |

### Phase C

| **Rohstoff** | **Bezugsquelle** | **INCI** | **[%]** |
|---|---|---|---|
| Isopropylmyristat | Cognis GmbH | Isopropyl Myristate | 8,00 |
| Paraffin dünnflüssig | Merck KGaA/Rona^{®} | Paraffinum Liquidum (Mineral Oil) | 3,60 |
| Crodamol SS | Croda GmbH | Cetyl Esters | 2,60 |
| Monomuls 60-35 C | Cognis GmbH | Hydrogenated Palm Glycerides | 1,70 |
| Stearinsäure | Merck KGaA/Rona^{®} | Stearic Acid | 1,50 |
| EUSOLEX^{®} 6300 | Merck KGaA/Rona^{®} | 4-Methylbenzylidene Camphor | 1,30 |
| EUSOLEX^{®} 4360 | Merck KGaA/Rona^{®} | Benzophenone-3 | 0,50 |
| Rona Care^{™} Tocopherolacetat | Merck KGaA/Rona^{®} | Tocopheryl Acetate | 0,50 |
| Magnesiumstearat | Merck KGaA/Rona^{®} | Magnesium Stearate | 0,10 |
| Propyl-4-hydroxybenzoat | Merck KGaA/Rona^{®} | Propylparaben | 0,05 |

### Phase D

| **Rohstoff** | **Bezugsquelle** | **INCI** | **[%]** |
|---|---|---|---|
| Pafrümöl 200 529 | Fragrance Resources | Parfum | 0,20 |
| Euxyl K 400 | Schülke & Mayr GmbH | Phenoyxethanol, Methyldibromo, Glutaronitrile | 0,20 |

### Herstellung:

Alle Bestandteile der Phase C bei ca. 75 °C aufschmelzen und rühren, bis alles geschmolzen ist. Das Wasser der Phase B kalt vorlegen, Blanose mit dem Turrax einhomogenisieren, Veegum einstreuen und erneut homogenisieren. Auf 75 °C erwärmen und unter Rühren die übrigen Bestandteile darin lösen. Inhaltsstoffe der Phase A einrühren. Bei 75°C unter Rühren die Phase C zugeben und 2 min. homogenisieren. Die Masse unter Rühren auf 40 °C abkühlen, Phase D zugeben. Unter Rühren auf Raumtemperatur weiter abkühlen und auf pH 6,0 - 6,5 einstellen (z.B. mit Citronensäurelösung).

### Beispiel B: Duschgel

### Phase A

| **Rohstoff** | **Bezugsquelle** | **INCI** | [%] |
|---|---|---|---|
| Pigment aus Beispiel 2 | Merck KGaA | | 0,10 |
| Keltrol T | Kelco | Xanthan Gum | 0,75 |
| Wasser, demineralisiert | | Aqua (Water) | 64,95 |

### Phase B

| **Rohstoff** | **Bezugsquelle** | **INCI** | **[%]** |
|---|---|---|---|
| Plantacare 2000 UP | Cognis GmbH | Decyl Glucoside | 20,00 |
| Texapon ASV 50 | Cognis GmbH | Sodium Laureth Sulfate, Sodium Laureth-8 Sulfate, Magnesium Laureth Sulfate, Magnesium Laureth-8 Sulfate, Sodium Oleth Sulfate, Magnesium Oleth Sulfate | 3,60 |
| Bronidox L | Cognis GmbH | Propylene Glycol, 5-Bromo-5-Nitro-1,3-Dioxane | 0,20 |
| Parfümöl Everest 79658 SB gestrichen) | Haarmann & Reimer GmbH | Parfum | 0,05 |
| 1 % FD&C lue No. 1 in Wasser | BASF AG | Aqua (Water), Cl 42090 (FD&C Blue No. 1) | 0,20 |

### Phase C

| **Rohstoff** | **Bezugsquelle** | **INCI** | **[%]** |
|---|---|---|---|
| Citronensäure Monohydrat | Merck KGaA/Rona^{®} | Citric Acid | 0,15 |
| Wasser, demineralisiert | | Aqua (Water) | 10,00 |

### Herstellung:

Für Phase A das Pigment in das Wasser einrühren. Keltril T unter Rühren langsam einstreuen und rühren bis es gelöst ist. Die Phasen B und C nacheinander hinzufügen und dabei langsam rühren bis alles homogen verteilt ist. PH-Wert auf 6,0 bis 6,4 einstellen.

### Beispiel C: Eyeliner Gel

### Phase A

| **Rohstoff** | **Bezugsquelle** | **INCI** | **[%]** |
|---|---|---|---|
| Pigment aus Beispiel 3 | Merck KGaA | | 5,00 |
| Xirona^{®} Magic Mauve | Merck KGaA/Rona^{®} | Silica, Cl 77891 (Titanium Dioxide), Tin oxide | 10,00 |
| Mica Black | Merck KGaA/Rona^{®} | Cl 77499 (Iron Oxides), MICA, Cl 77891 (Titanium Dioxide) | 5,00 |
| RONASPHERE^{®} | Merck KGaA/Rona^{®} | Silica | 2,00 |
| Carbopol ETD 2001 | BF Goodrich | Carbomer | 0,40 |
| Citronensäure Monohydrat | Merck KGaA/Rona^{®} | Citric Acid | 0,00 |
| Wasser, demineralisiert | | Aqua (Water) | 60,00 |

### Phase B

| **Rohstoff** | **Bezugsquelle** | **INCI** | **[%]** |
|---|---|---|---|
| Glycerin, wasserfrei | Merck KGaA/Rona^{®} | Glycerin | 4,00 |
| Triethanolamin reinst | Merck KGaA/Rona^{®} | Triethanolamine | 0,90 |
| Luviskol VA 64 Powder | BASF AG | PVPNA Copolymer | 2,00 |
| Germaben II | ISP Global Technologies | Propylene Glycol, Diazolidinyl Urea, Methylparaben, Propylparaben | 1,00 |
| Wasser, demineralisiert | | Aqua (Water) | 9,70 |

### Herstellung:

Effektpigmente und Ronasphere^{®} im Wasser der Phase A dispergieren. Mit einigen Tropfen Citronensäure ansäuern um die Viskosität zu vermindern, Carbopol unter Rühren einstreuen. Nach vollständiger Lösung die vorgelöste Phase B langsam einrühren und pH-Wert auf 7,0 bis 7,5 einstellen.

### Beispiel D: Lidschatten

### Phase A

| **Rohstoff** | **Bezugsquelle** | **INCI** | **[%]** |
|---|---|---|---|
| Xirona^{®} Caribbean Blue | Merck KGaA/Rona^{®} | Silica, Cl 77891 (Titanium Dioxide), Mica, Tin Oxide | 45,00 |
| Mica Black | Merck KGaA/Rona^{®} | Cl 77499 (Iron Oxides), MICA, Cl 77891 (Titanium Dioxide) | 5,00 |
| Pigment aus Beispiel 1 | Merck KGaA | | 5,00 |
| BiRON^{®} B 50 | Merck KGaA/Rona^{®} | Cl 77163 (Bismuth Oxychloride) | 3,00 |
| Colorona^{®} Dark Blue | Merck KGaA/Rona^{®} | MICA, Cl 77891 (Titanium Dioxide), Cl 77510 (Ferric Ferrocyanide) | 10,00 |
| Magnesiumstearat | Merck KGaA/Rona^{®} | Magnesium Stearate | 2,50 |
| Weißer Ton gestrichen) | Merck KGaA/Rona^{®} | Kaolin | 5,00 |
| Hubersorb 600 | J.M. Huber Corp. | Calcium Stearate | 0,50 |
| Talkum | Merck KGaA/Rona^{®} | Talc | 11,00 |

### Phase B

| **Rohstoff** | **Bezugsquelle** | **INCI** | **[%]** |
|---|---|---|---|
| Amerchol L 101 | Amerchol | Lanolin Alcohol, Paraffinum Liquidum (Minral Oil) | 10,70 |
| Super Hartolan | Croda GmbH | Lanolin Alcohol | 1,00 |
| Ewalin 1751 | H. Erhard Wagner GmbH | Petrolatum | 1,00 |
| Propyl-4-hydroxybenzoat | Merck KGaA/Rona^{®} | Propylparaben | 0,10 |
| Parfümöl Elegance # 79228 D MF | Haarmann & Reimer GmbH | Parfum | 0,20 |

### Herstellung:

Bestandteile der Phase A zusammen geben und vormischen. Anschließend die Pudermischung unter Rühren tropfenweise mit der geschmolzenen Phase B versetzen. Die Puder werden bei 40 bis 50 bar gepresst.

### Beispiel E: Eye Shadow Gel

### Phase A

| **Rohstoff** | **Bezugsquelle** | **INCI** | **[%]** |
|---|---|---|---|
| Xirona^{®} Indian Summer | Merck KGaA/Rona^{®} | Silica, Cl 77491 (Iron Oxides) | 15,00 |
| Pigment aus Beispiel 3 | Merck KGaA | | 5,00 |
| RONASPHERE^{®} | Merck KGaA/Rona^{®} | SILICA | 3,00 |
| Carbopol ETD 2001 | BF Goodrich GmbH | CARBOMER | 0,30 |
| Citronensäure Monohydrat | Merck KGaA/Rona^{®} | Citric Acid | 0,00 |
| Wasser, deminralisiert | | Aqua (Water) | 60,00 |

### Phase B

| **Rohstoff** | **Bezugsquelle** | **INCI** | **[%]** |
|---|---|---|---|
| Glycerin, wasserfrei | Merck KGaA/Rona^{®} | Glycerin | 2,00 |
| Germaben II | ISP Global Technologies | Propylene Glycol, Diazolidinyl Urea, Methylparaben, Propylparaben | 0,20 |
| Triethanolamin reinst | Merck KGaA/Rona^{®} | Triethanolamine | 0,70 |
| Wasser, demineralisiert | | Aqua (Water) | 13,80 |

### Herstellung:

Effektpigmente und Ronasphere^{®} im Wasser der Phase A dispergieren. Mit einigen Tropfen Citronensäure ansäuern um die Viskosität zu vermindern, Carbopol unter Rühren einstreuen. Nach vollständiger Lösung die vorgelöste Phase B langsam einrühren.

### Beispiel F: Lidschatten

### Phase A

| **Rohstoff** | **Bezugsquelle** | **INCI** | **[%]** |
|---|---|---|---|
| Xirona^{®} Caribbean Blue | Merck KGaA/Rona^{®} | Silica, Cl 77891 (Titanium Dioxide), MICA, TIN Oxide | 20,00 |
| Colorona^{®} Dark Blue | Merck KGaA/Rona^{®} | MICA, Cl 77891 (Titanium Dioxide), Cl 77510 (Ferric Ferrocyanide) | 5,00 |
| Pigment aus Beispiel 2 | Merck KGaA | | 5,00 |
| Talkum | Merck KGaA/Rona^{®} | Talc | 49,50 |
| Kartoffelstärke | Südstärke GmbH | Solanum Tuberosum (Potato Starch) | 7,50 |
| Magnesiumstearat | Merck KGaA/Rona^{®} | Magnesium Stearate | 2,50 |

### Phase B

| **Rohstoff** | **Bezugsquelle** | **INCI** | **[%]** |
|---|---|---|---|
| Isopropylstearat | Cognis GmbH | Isopropyl Stearate | 9,14 |
| Cetylpalmitat | Merck KGaA/Rona^{®} | Cetyl Palmitate | 0,53 |
| Ewalin 1751 | H. Erhard Wagner GmbH | Petrolatum | 0,53 |
| Parfümöl Elegance # | Haarmann & | Parfum | 0,20 |
| 79228 D MF | Reimer GmbH | | |
| Propyl-4-hydroxybenzoat | Merck KGaA/Rona^{®} | Propylparaben | 0,10 |

### Herstellung:

Bestandteile der Phase A zusammen geben und vormischen. Anschließend die Pudermischung unter Rühren tropfenweise mit der geschmolzenen Phase B versetzen. Die Puder werden bei 40 bis 50 bar gepresst.

### Beispiel G: Nagellack

| **Rohstoff** | **Bezugsquelle** | **INCI** | **[%]** |
|---|---|---|---|
| Pigment aus Beispiel 1 | Merck KGaA | | 2,00 |
| Thixotrope Nagellack-Base 1348 | International Lacquers S.A. | Toluene, Ethyl Acetate, Butyl Acetate, Nitrocellulose, Tosylamide/Formaldehy de Resin, Dibutyl Phthalate, Isopropyl Alcohol, Stearalkonium Hectorite, Camphor, Acrylates Copolymer, Benzophenone-1 | 98,00 |

### Herstellung:

Das Pigment wird zusammen mit der Lackbase eingewogen, gut mit einem Spatel von Hand vermischt und anschließend 10 min bei 1000 Upm gerü ht.

### Beispiel H: Lip Lacquer

### Phase A

| **Rohstoff** | **Bezugsquelle** | **INCI** | **[%]** |
|---|---|---|---|
| Pigment aus Beispiel 1 | Merck KGaA | | 2,50 |
| Timiron^{®} Splendid Violet | Merck KGaA/Rona^{®} | MICA, Silica, Cl 77891 (Titanium Dioxide) | 5,00 |
| Xirona^{®} Indian Summer | Merck KGaA/Rona^{®} | Silica, Cl 77491 (Iron Oxides) | 2,50 |
| Rubis Covapate W 4765 | Les Colorants Wackherr | Ricinus Communis (Castor Oil), Cl 15850 (D&C Red No. 7 Calcium Lake) | 5,00 |

### Phase B

| **Rohstoff** | **Bezugsquelle** | **INCI** | **[%]** |
|---|---|---|---|
| Foralyn 5020-F | Hercules BV | Methyl hydrogenated rosinate | 20,00 |
| Adeps Lanae | Henry Lamotte GmbH | Lanolin | 18,00 |
| Castor oil | Henry Lamotte GmbH | Ricinus Communis (Castor Oil) | 13,75 |
| Foral 85-E | Hercules BV | Glyceryl hydrogenated rosinate | 12,00 |
| Jojoba oil | Gustav Heess GmbH | Buxus Chinensis (Jojoba oil) | 5,00 |
| Eusolex^{®} 2292 | Merck KGaA/Rona^{®} | Ethylhexyl methoxycinnamate, BHT | 3,00 |
| Antaron V-216 | ISP Global Technologies | PVP/Hexadecene Copolymer | 4,00 |
| Candelilla Wax 2039 L | Kahl & Co. | Candelilla Cera (Candelilla Wax) | 3,50 |
| Amerchol L 101 | Amerchol | Lanolin Alcohol, Paraffinum Liquidum (Mineral Oil) | 3,00 |
| Rohagit S | Röhm GmbH | Acrylates Copolymer | 1,50 |
| Beeswax white | Merck KGaA/Rona^{®} | Cera Alba (Beeswax) | 1,00 |
| Propyl-4-hydroxybenzoate | Merck KGaA/Rona^{®} | Proplyparaben | 0,10 |
| Oxynex^{®} K liquid | Merck KGaA/Rona^{®} | PEG-8, Tocopherol, Ascorbyl Palmitate, Ascorbic Acid, Citric Acid | 0,05 |

### Phase C

| **Rohstoff** | **Bezugsquelle** | **INCI** | **[%]** |
|---|---|---|---|
| Fragrance Tendresse # 75418C | Haarmann & Reimer GmbH | Parfum | 0,10 |

### Herstellung:

Alle Bestandteile (außer Foral 85-E) von Phase B auf 80 °C erwärmen und unter Rühren langsam Foral 85-E zugeben. Phase A und Phase C zu der geschmolzenen Phase B zugeben. Die homogene Schmelze bei 50 °C in Form gießen.

## Patentansprüche

1. Silberpigmente auf der Basis von niedrigbrechenden transparenten plättchenförmigen Substraten, **dadurch gekennzeichnet, dass** das transparente Plättchen ein SiO₂-Plättchen, Al₂O₃-Plättchen, ein Polymerplättchen, ein Einkristall oder Glasplättchen ist, die mittlere Dicke der einzelnen Plättchen innerhalb einer Standardabweichung ≤ 20 % liegt, und die Substrate eine hochbrechende Beschichtung bestehend aus TiO₂ mit einer Schichtdicke von 5 - 300 nm und optional eine äußere Schutzschicht aufweisen.

2. Silberpigmente nach Anspruch 1, **dadurch gekennzeichnet, dass** das transparente Plättchen ein SiO₂-Plättchen ist.

3. Silberpigmente nach Anspruch 1 oder 2, **dadurch gekennzeichnet, dass** das TiO₂ in der Rutil-Modifikation vorliegt.

4. Silberpigmente nach einem oder mehreren der Ansprüche 1 bis 3, **dadurch gekennzeichnet, dass** die mittlere Dicke der Substrate zwischen 0,02 und 10 µm liegt.

5. Silberpigmente nach einem oder mehreren der Ansprüche 1 bis 4, **dadurch gekennzeichnet, dass** die mittlere Dicke der Substrate zwischen 0,03 und 5 µm liegt.

6. Silberpigmente nach einem oder mehreren der Ansprüche 1 bis 5, **dadurch gekennzeichnet, dass** der Formfaktor (aspect ratio: Durchmesser/Dicke-Verhältnis) des Substrats 1-1000 beträgt.

7. Silberpigmente nach einem oder mehreren der Ansprüche 1 bis 6, **dadurch gekennzeichnet, dass** der Formfaktor (aspect ratio: Durchmesser/Dicke-Verhältnis) des Substrats 3-500 beträgt.

8. Verfahren zur Herstellung der Silberpigmente nach einem oder mehreren der Ansprüche 1 bis 7, **dadurch gekennzeichnet, dass** die Beschichtung der Substrate nasschemisch durch hydrolytische Zersetzung von Metallsalzen in wässrigem Medium oder durch thermische Zersetzung nach dem CVD- oder PVD-Verfahren erfolgt.

9. Verwendung der Silberpigmente nach einem oder mehreren der Ansprüche 1 bis 7 in Farben, Lacken, Druckfarben, Sicherheitsdruckfarben, Kunststoffen, Knopfpasten, keramischen Materialien, Gläsern, zur Saatgutbeschichtung, als Dotiermittel für die Lasermarkierung von Kunststoffen und Papieren, als Additiv zur Farbgebung im Lebensmittel- und Pharmabereich, in kosmetischen Formulierungen und zur Herstellung von Pigmentpräparationen und Trockenpräparaten.

10. Pigmentpräparationen enthaltend ein oder mehrere Bindemittel, optional ein oder mehrere Additive und ein oder mehrere Silberpigmente gemäß einem oder mehreren der Ansprüche 1 bis 7.

11. Trockenpräparationen wie Pellets, Granulate, Chips, Briketts enthaltend Silberpigmente nach einem oder mehreren der Ansprüche 1 bis 7.

## Claims

1. Silver pigments based on low-refractive-index, transparent, flake-form substrates, **characterised in that** the transparent flake is an SiO₂ flake, Al₂O₃ flake, a polymer flake, a single crystal or a glass flake, the average thickness of the individual flakes is within a standard deviation of ≤ 20%, and the substrates have a high-refractive-index coating consisting of TiO₂ having a layer thickness of 5 - 300 nm and optionally an outer protective layer.

2. Silver pigments according to Claim 1, **characterised in that** the transparent flake is an SiO₂ flake.

3. Silver pigments according to Claim 1 or 2, **characterised in that** the TiO₂ is in the rutile modification.

4. Silver pigments according to one or more of Claims 1 to 3, **characterised in that** the average thickness of the substrates is between 0.02 and 10 µm.

5. Silver pigments according to one or more of Claims 1 to 4, **characterised in that** the average thickness of the substrates is between 0.03 and 5 µm.

6. Silver pigments according to one or more of Claims 1 to 5, **characterised in that** the form factor (aspect ratio: diameter/thickness ratio) of the substrate is 1-1000.

7. Silver pigments according to one or more of Claims 1 to 6, **characterised in that** the form factor (aspect ratio: diameter/thickness ratio) of the substrate is 3-500.

8. Process for the preparation of the silver pigments according to one or more of Claims 1 to 7, **characterised in that** the coating of the substrates is carried out by wet-chemical methods by hydrolytic decomposition of metal salts in aqueous medium or by thermal decomposition by the CVD or PVD process.

9. Use of the silver pigments according to one or more of Claims 1 to 7 in paints, coatings, printing inks, security printing inks, plastics, button pastes, ceramic materials, glasses, for seed coating, as dopants for the laser marking of plastics and papers, as additives for colouring in the foods and pharmaceuticals sectors, in cosmetic formulations and for the preparation of pigment compositions and dry preparations.

10. Pigment compositions comprising one or more binders, optionally one or more additives and one or more silver pigments according to one or more of Claims 1 to 7.

11. Dry preparations, such as pellets, granules, chips, briquettes, comprising silver pigments according to one or more of Claims 1 to 7.

## Revendications

1. Pigments d'argent basés sur des substrats sous forme de flocon transparent à indice de réfraction faible, **caractérisés en ce que** le flocon transparent est un flocon de SiO₂, un flocon d'Al₂O₃, un flocon de polymère, un monocristal ou un flocon de verre, l'épaisseur moyenne des flocons individuels s'inscrit à l'intérieur d'une déviation standard ≤ 20% et les substrats comportent un revêtement à indice de réfraction élevé constitué par du TiO₂ présentant une épaisseur de couche de 5 - 300 nm et en option, une couche de protection externe.

2. Pigments d'argent selon la revendication 1, **caractérisés en ce que** le flocon transparent est un flocon de SiO₂.

3. Pigments d'argent selon la revendication 1 ou 2, **caractérisés en ce que** le TiO₂ est selon la modification rutile.

4. Pigments d'argent selon une ou plusieurs des revendications 1 à 3, **caractérisés en ce que** l'épaisseur moyenne des substrats se situe entre 0,02 et 10 µm.

5. Pigments d'argent selon une ou plusieurs des revendications 1 à 4, **caractérisés en ce que** l'épaisseur moyenne des substrats se situe entre 0,03 et 5 µm.

6. Pigments d'argent selon une ou plusieurs des revendications 1 à 5, **caractérisés en ce que** le facteur de forme (rapport d'aspect : rapport diamètre/épaisseur) du substrat est de 1-1000.

7. Pigments d'argent selon une ou plusieurs des revendications 1 à 6, **caractérisés en ce que** le facteur de forme (rapport d'aspect : rapport diamètre/épaisseur) du substrat est de 3-500.

8. Procédé pour la préparation de pigments d'argent selon une ou plusieurs des revendications 1 à 7, **caractérisé en ce que** le revêtement des substrats est mis en oeuvre au moyen de procédés chimiques par voie humide par décomposition hydrolytique de sels métalliques dans un milieu aqueux ou par décomposition thermique au moyen du procédé CVD ou PVD.

9. Utilisation des pigments d'argent selon une ou plusieurs des revendications 1 à 7 dans des peintures, des revêtements, des encres d'impression, des encres d'impression de sécurité, des matières plastiques, des pâtes à boutons, des matériaux de céramique, des verres, pour un enrobage de semences, en tant que dopants pour le marquage laser de matières plastiques et de papiers, en tant qu'additifs pour la coloration dans les secteurs alimentaire et pharmaceutique, dans des formulations cosmétiques et pour la préparation de compositions de pigments et de préparations sèches.

10. Compositions de pigments comprenant un ou plusieurs liant(s), en option un ou plusieurs additif(s) et un ou plusieurs pigment(s) d'argent selon une ou plusieurs des revendications 1 à 7.

11. Préparations sèches, telles que des pastilles, des granules, des lamelles, des briquettes, comprenant des pigments d'argent selon une ou plusieurs des revendications 1 à 7.
